# EUROPEAN PATENT SPECIFICATION

(11) **EP 0 758 201 B1**
(45) Date of publication and mention of the grant of the patent: **20.03.2002**
(21) Application number: 95917374.1
(22) Date of filing: 04.05.1995
(51) Int. Cl.: A23N 7/02

(54) **PEELING DEVICE FOR POTATOES AND SIMILAR PRODUCTS**
SCHÄLVORRICHTUNG FÜR KARTOFFELN UND ÄHNLICHE PRODUKTE
DISPOSITIF D'EPLUCHAGE DE POMMES DE TERRE ET DE PRODUITS SIMILAIRES

(30) Priority: 05.05.1994 FI 942072
(43) Date of publication of application: 19.02.1997
(73) Proprietor: Norrvik, Elmer Egil, 64320 Dagsmark (FI)
(72) Inventor: Norrvik, Elmer Egil, 64320 Dagsmark (FI)
(74) Representative: Dahlström, Karl Krister
(86) International application number: FI9500239
(87) International publication number: WO9530342

(56) References cited:
- EP-A- 0 322 252
- EP-A- 0 583 569
- SE-B- 448 668
- US-A- 4 237 782

## Description

### Background of the invention

This invention relates to a peeling device intended for potatoes and similar products. In particular it relates to a peeling device described in the preamble of claim 1.

It is previously known to peel potatoes and similar products mechanically with various rotating grinding means.

A so-called roll drum peeler is provided with peeling rolls positioned in such a way that they form a cylindrical drum in which the product is conveyed forward. In addition to the peeling rolls, even the drum rotates and prevents thereby the product from ceasing to move between two rolls and from being ground unevenly. The diameter of the rolls is usually 100 to 150 mm. The rotation speed of the rolls varies generally between 150 and 1000 rotations per minute. A screw feeder is generally used for conveying the product through the peeling machine.

This kind of peeling devices intended for vegetable products are disclosed in SE 448 668 and US 4 237 782 for instance. The devices comprise peeling rolls which are essentially parallel and horizontal. In the latter publication there is described a device where each peeling roll is actuated by its own hydraulic motor. In the former SE-publication there is described a device where these rolls are actuated by applying a transmission belt to belt pulleys at the end of the rolls, the belt pulleys being placed in the same sectional plane. The diameter of these belt pulleys are essentially of the same or a slightly smaller diameter than the rolls.

In another type of peeling device, roll peeler, the peeling rolls are positioned in such a way that they form a semi-cylindrical trough. The peeling rolls are provided with various longitudinally disposed ridges or curved in various ways to make the product move as necessary. However, these arrangements subject the product to jerky movements, which impairs the quality of the product, e.g. its keeping quality. In these machines, water is normally used during the peeling process mainly to keep the rolls free from peelings. However, this results in a large amount of waste water.

### Summary of the present invention

The present invention relates to an improved roll peeler in which jerky movement of the product has been eliminated. The mobility of the product is ensured by keeping the diameter of the peeling rolls sufficiently small so that the product moves easily over the rolls.

Because of a relatively high rotation speed of the peeling rolls, the peelings are slung from the rolls and the rolls remain clean. Water is not needed at all during the actual peeling process, but is needed only afterwards for rinsing, wherefore the amount of produced waste water is minimal. The peeling waste has a more solid consistency and can be used for animal feed or the like.

In addition, the small diameter of the rolls renders the bottom of the trough tight, which makes it possible to peel even products of a small size (small potatoes).

The peeling effect can be enhanced by coating the grinding rolls with grinding material having a grain size that gradually decreases during the process. Thus the product is rapidly peeled by the coarse-grained grinding material at the beginning, and is given a smooth surface by the more fine-grained grinding material at the end of the process.

The product is conveyed through the peeling device by means of a screw feeder. To ensure that the product is kept mobile, a certain minimum pitch is required for the thread of the screw feeder (250 to 300 mm). The outlet end of the screw feeder can, however, be provided with a double thread. This divides the product into two parts in such a manner that the product is discharged twice per each rotation of the screw feeder. The peeled product is thus discharged at a more regular pace, which is significant, for example, when the product is sorted manually.

The invention further relates to a method of actuating the peeling rolls. The cone belts between the belt pulley of the motor and the belt pulleys of the peeling rolls are divided into two groups so that one group actuates every second peeling roll and the other group the rest of them. Larger friction surfaces are thus provided between the cone belts and the belt pulleys, whereby sufficient motive power is achieved at low costs.

### Brief description of the drawings

An embodiment of the invention will be described in the following. Numbers referring to the accompanying drawings will be given in brackets.

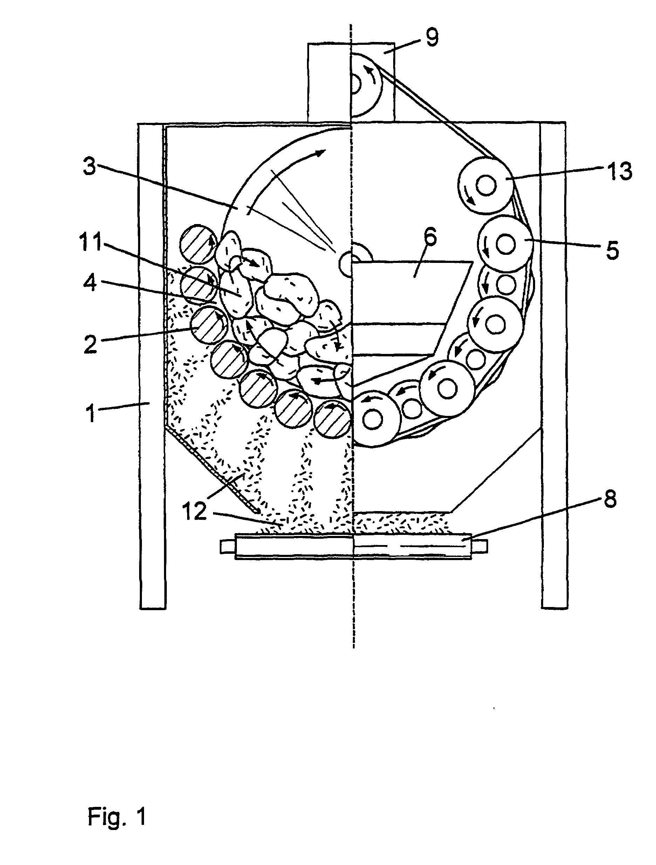

Figure 1 is a partial cross-section of the peeling device described.

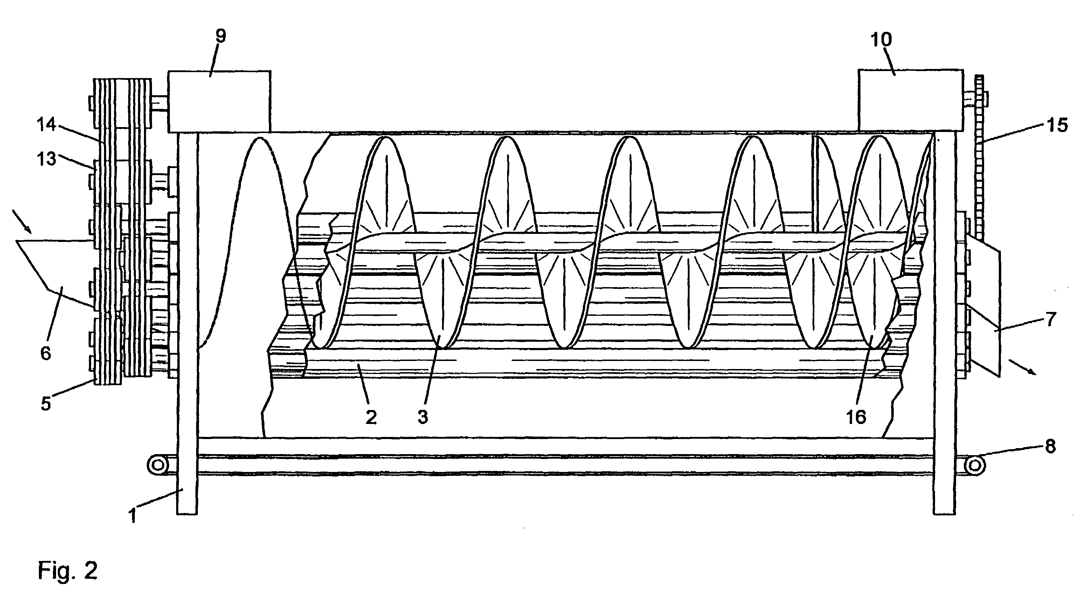

Figure 2 is a partly sectional view of the peeling device in the longitudinal direction.

### Description of a preferred embodiment

The machine comprises a frame (1) in which peeling rolls (2) are positioned horizontally and parallelly in such a manner that they form a semi-cylinder (trough). The rolls are disposed close to each other, the distance between them being only 4 to 6 mm. Each peeling roll is suspended from the frame and rotatable around its longitudinal axis. At one end of the machine, there is an inlet (6) for introducing the unpeeled product into the trough, and at the opposite end, there is an outlet (7) for the peeled product.

Inside the trough formed by the peeling rolls, there is provided a screw feeder (3) which is rotatably mounted in the longitudinal direction for conveying the product in the longitudinal direction of the machine from the inlet (6) over the rotating peeling rolls towards the outlet (7). The screw feeder is positioned as close to the peeling rolls as possible. The screw feeder is driven by an electric motor (10) provided with gearing, via a chain (15). The screw feeder is double threaded (16) at the outlet end to allow the peeled product to be discharged at a more regular pace. The screw feeder can be provided with an electronic or mechanical speed control to optimise the peeling process for products of different types.

The grinding coating of the peeling rolls is coarse-grained at the inlet end, more fine-grained at the middle portion, and very fine-grained at the outlet end. This improves the peeling effect at the beginning of the process and gives the peeled product a smoother surface, which essentially enhances its keeping qualities.

The diameter of the peeling rolls is 50 to 100 mm, preferably 60 mm. Because of the small diameter, the triangular gaps (4) between the rolls and the screw feeder are very small. The even and tight bottom thus formed is particularly important, for example, in the peeling of small potatoes.

All peeling rolls have the same direction of rotation. Combined with the small diameter, this makes the movement (11) of the product such that, near the bottom, it follows the rotating rolls until it reaches a sufficiently high position in the lateral direction, again rolling or sliding to the bottom. The entire skin surface is ground without that the product ceases to move or without unnecessary jerky movements. The peelings (12) are slung from the rolls; they fall on a conveying belt (8) and are then carried away.

Owing to the small diameter of the peeling rolls and the high rotation speed (800 to 1000 rotations per minute), the peelings are slung from the rolls, and thus the rolls are kept clean. This allows the peeling to take place completely without water.

The rolls are actuated by four cone belts (14), all of which run from the belt pulley of the electric motor (9) round the belt pulleys (5) of the peeling rolls. The belt pulleys provided with two grooves and fixed on the shafts of the peeling rolls are positioned in such a manner that, on every second shaft, the pulley is disposed further away in the longitudinal direction of the shaft compared with the preceding one; two of the belts thus actuate every second peeling roll, while the other two actuate the rest of the rolls. This arrangement allows the use of belt pulleys having a larger diameter than the peeling rolls. Consequently, the belts have a larger contact surface, wherefore a higher motive power is provided. In addition, the rolls can be made to rotate at different speeds by means of cone belt pulleys of different sizes, which enhances the peeling effect. In this embodiment, the tension of the belts is adjusted by means of auxiliary belt pulleys (13).

## Claims

1. A peeling device for potatoes and similar products, comprising a plurality of peeling rolls (2) suspended substantially horizontally and parallelly from a frame (1), whereby they form a trough having the form of a cylinder sector, preferably a semi-cylinder, said peeling rolls being made to rotate by means of belts (14) mounted on belt pulleys (5) at one end of the peeling rolls, **characterised in that** the belt pulleys (5) have a larger diameter than the peeling rolls, the belt pulleys (5) on every second peeling roll being positioned further away substantially in the longitudinal direction of the peeling roll.

2. A peeling device according to claim 1, **characterised in that** the belt pulleys (5) are positioned on two parallel sectional surfaces of the apparatus.

3. A peeling device according to claim 1 or 2, **characterised in that** the belt pulleys (5) positioned on the two parallel sectional surfaces of the apparatus are of different size.

4. A peeling device according to any one of claims 1 to 3, **characterised in that** the peeling rolls (2) have a relatively small diameter, preferably 50 to 100 mm.

5. A peeling device according to any one of claims 1 to 4, **characterised in that** the peeling rolls (2) are provided with a coating for subjecting the product to a grinding effect to remove its skin, said coating having the greatest grain size near the inlet (6) and gradually smaller grain size towards the outlet (7).

6. A peeling device according to any one of claims 1 to 5, **characterised in that** the screw feeder (3) is provided with double or multiple threading (16) at its outlet end.

## Patentansprüche

1. Schälvorrichtung für Kartoffeln und ähnliche Produkte mit einer Mehrzahl von Schälwalzen (2), die im wesentlichen horizontal und parallel an einem Rahmen (1) aufgehängt sind, wodurch sie ein Rinne in Form eines Zylinderabschnitts, vorzugsweise eines Halbzylinders, bilden, wobei die Schälwalzen mittels Riemen (14), die sich auf Riemenscheiben (5) an einem Ende der Schälwalzen befinden, gedreht werden,
**dadurch gekennzeichnet, daß**
die Riemenscheiben (5) einen größeren Durchmesser haben als die Schälwalzen, wobei die Riemenscheiben (5) auf jeder zweiten Schälwalze im wesentlichen in Längsrichtung der Schälwalze weiter entfernt positioniert werden.

2. Schälvorrichtung nach Anspruch 1, **dadurch gekennzeichnet, daß** die Riemenscheiben (5) sich auf zwei parallelen Teilflächen des Geräts befinden.

3. Schälvorrichtung nach Anspruch 1 oder 2, **dadurch gekennzeichnet, daß** die sich auf den zwei parallelen Teilflächen des Geräts befindlichen Riemenscheiben (5) unterschiedliche Größe haben.

4. Schälvorrichtung nach einem der Ansprüche 1 bis 3, **dadurch gekennzeichnet, daß** die Schälwalzen (2) einen relativ geringen Durchmesser von vorzugsweise 50 bis 100 mm haben.

5. Schälvorrichtung nach einem der Ansprüche 1 bis 4, **dadurch gekennzeichnet, daß** die Schälwalzen (2) eine Beschichtung aufweisen, wodurch das Produkt zum Entfernen der Schale einer Schleifwirkung unterworfen wird, wobei die Beschichtung in der Nähe des Einlasses (6) die größte Korngröße und zum Auslaß (7) hin eine allmählich abnehmende Korngröße aufweist.

6. Schälvorrichtung nach einem der Ansprüche 1 bis 5, **dadurch gekennzeichnet, daß** die Schneckenladevorrichtung (3) an ihrem Auslaßende mit einem zwei- oder mehrgängigen Gewinde (16) versehen ist.

## Revendications

1. Dispositif d'épluchage de pommes de terre et de produits similaires, comprenant plusieurs rouleaux d'épluchage (2) sensiblement horizontaux et parallèles suspendus à un cadre (1), lesdits rouleaux formant une auge de la forme d'un secteur de cylindre, de préférence un demi-cylindre, et étant entraînés en rotation par des courroies (14) montées sur des poulies (5) à l'une des extrémités des rouleaux d'épluchage, **caractérisé en ce que** les poulies (5) ont un diamètre supérieur à celui des rouleaux d'épluchage, les poulies (5) montées sur un rouleau d'épluchage sur deux étant sensiblement plus éloignées dans la direction longitudinale du rouleau d'épluchage.

2. Dispositif d'épluchage selon la revendication 1, **caractérisé en ce que** les poulies (5) sont disposées dans deux plans transversaux parallèles de l'appareil.

3. Dispositif d'épluchage selon la revendication 1 ou 2, **caractérisé en ce que** les poulies (5) disposées dans deux plans transversaux parallèles de l'appareil sont de tailles différentes.

4. Dispositif d'épluchage selon l'une quelconque des revendications 1 à 3, **caractérisé en ce que** les rouleaux d'épluchage (2) sont de diamètre relativement faible, de préférence 50 à 100 mm.

5. Dispositif d'épluchage selon l'une quelconque des revendications 1 à 4, **caractérisé en ce que** les rouleaux d'épluchage (2) sont dotés d'un revêtement destiné à soumettre le produit à un effet abrasif afin d'enlever la peau, la granularité dudit revêtement étant plus grande à proximité de l'entrée (6) et diminuant graduellement en direction de la sortie (7).

6. Dispositif d'épluchage selon l'une quelconque des revendications 1 à 5, **caractérisé en ce que** la vis d'alimentation (3) est dotée d'un filetage (16) double ou multiple sur son extrémité de sortie.
